# EUROPÄISCHE PATENTANMELDUNG

(11) **EP 4 005 725 A1**
(43) Veröffentlichungstag der Anmeldung: **01.06.2022**
(21) Anmeldenummer: 21208558.3
(22) Anmeldetag: 16.11.2021
(51) Int. Cl.: B23K 31/00, B23K 31/12, G01N 27/9013, G01N 27/90, H01M 50/536

(54) **VERFAHREN ZUR HERSTELLUNG EINES BATTERIEELEMENTS**

(30) Priorität: 30.11.2020 DE 102020215071
(71) Anmelder: Volkswagen AG, 38440 Wolfsburg (DE)
(72) Erfinder: KRAKEN, Mathias, 38116 Braunschweig (DE); ROHKOHL, Erik, 38300 Wolfenbüttel (DE); SCHÖNEMANN, Malte, 38104 Braunschweig (DE); BREUER, Alexander, 29227 Celle (DE); EHMANN, Sebastian, 38302 Wolfenbüttel (DE)
(74) Vertreter: FDST Patentanwälte

(57) **Zusammenfassung**

Verfahren zur Herstellung eines Batterieelements (2), wobei mindestens zwei Batteriekomponenten (4, 6) in einem Schweißvorgang stoffschlüssig mittels mindestens einer Schweißverbindung (18) gefügt werden, wobei mindestens ein erster Wirbelstromsensor (20) zur Erzeugung und Erfassung von Wirbelströmen in der Schweißverbindung (18) vorgesehen ist, welcher mindestens einmal über die mindestens eine Schweißverbindung (18) geführt wird, wobei der erste Wirbelstromsensor (20) beim Führen über die Schweißverbindung (18) Wirbelstromdaten (26) erzeugt, wobei anhand der Wirbelstromdaten (26) und einer trainierten künstlichen Intelligenz eine die Schweißverbindung (18) charakterisierende erste Ausgangsgröße (28) erzeugt wird, wobei anhand der ersten Ausgangsgröße (28) eine Qualitätskontrolle durchgeführt wird, und wobei der Schweißvorgang anhand eines Ergebnisses der Qualitätskontrolle gesteuert und/oder geregelt wird.

## Beschreibung

Die Erfindung betrifft ein Verfahren zur Herstellung eines Batterieelements, wobei mindestens zwei übereinander gestapelt angeordnete Batteriekomponenten in einem Schweißvorgang stoffschlüssig mittels mindestens einer Schweißverbindung gefügt werden. Die Erfindung betrifft weiterhin eine Vorrichtung sowie eine Software zur Durchführung des Verfahrens.

Elektrisch antreibbare oder angetriebene Kraftfahrzeuge, wie beispielsweise Elektro- oder Hybridfahrzeuge, weisen typischerweise einen Elektromotor als Antriebsmaschine auf, welcher zur Versorgung mit elektrischer Energie an einen fahrzeuginternen elektrischen (Hochvolt-)Energiespeicher gekoppelt ist. Derartige Energiespeicher sind beispielsweise in Form von (Fahrzeug-)Batterien ausgeführt.

Unter einer elektrochemischen Batterie ist hierbei insbesondere eine sogenannte sekundäre Batterie (Sekundärbatterie) des Kraftfahrzeugs zu verstehen, bei welcher eine verbrauchte chemische Energie mittels eines elektrischen (Auf-)Ladevorgangs wiederherstellbar ist. Derartige Batterien sind insbesondere als elektro-chemische Akkumulatoren, beispielsweise als Lithium-lonen-Akkumulatoren, ausgeführt. Zur Erzeugung oder Bereitstellung einer ausreichend hohen Betriebsspannung weisen solche Batterien typischerweise mehrere einzelne Batteriezellen auf, welche modular verschaltet sind.

Die Batterien oder Batteriezellen werden beispielsweise aus folienartigen Batterieelektroden hergestellt. Die Batterieelektroden weisen in der Regel eine Aktivmaterialbeschichtung auf, welche auf ein Folienmaterial, insbesondere auf eine Kupfer- oder Aluminiumfolie, aufgetragen ist.

Im Zuge der Herstellung ist es notwendig, dass die Batterieelektroden beziehungsweise beschichteten Folienmaterialien einer Batteriezelle oder einer Batterie mit einem Stromableiter oder einer Ableiterfahne (Busbar, Ableitertab) elektrisch leitfähig verbunden werden. Die Verbindung wird hierbei typischerweise mittels eines Schweißprozesses, beispielsweise mittels eines Laser- oder Ultraschallschweißprozesses, über eine oder mehrere Schweißnähte hergestellt.

Die Güte und Qualität der Schweißverbindung oder der Schweißnaht an den Batteriekomponenten ist relevant für die Qualität der hergestellten Batterie oder Batteriezelle. Zur Reduktion von Ausschussteilen und zur Verbesserung eines Prozessverständnisses ist es daher wünschenswert, die erzeugten Schweißverbindungen oder Schweißnähte an den Batteriekomponenten möglichst zerstörungsfrei und vorzugsweise inline, also während des Herstellungsprozesses in der Herstellungs- oder Produktionslinie, zu untersuchen und/oder zu prüfen.

Eine Charakterisierung, also eine Kontrolle beziehungsweise eine Untersuchung und/oder Prüfung, von Schweißverbindungen ist beispielsweise durch eine Röntgenanalyse, insbesondere mittels einer Computertomographie (CT), oder eine Ultraschallmessung möglich. Nachteiligerweise sind Röntgenmessungen vergleichsweise zeitaufwendig und kostenintensiv, so dass sie nicht inline durchgeführt werden können. Bei Ultraschallmessungen ist insbesondere die Notwendigkeit eines Koppelmediums problematisch, so dass der Inline-Einsatz im Wesentlichen nicht möglich ist. Des Weiteren sind zu Untersuchung und/oder Prüfung der Schweißverbindungen beispielsweise elektrische Widerstandsmessungen über die Schweißnaht denkbar. Elektrische Widerstandsmessungen weisen jedoch eine zu geringe Sensitivität zur Untersuchung von Schweißnähten bei Batteriekomponenten auf. Des Weiteren weisen derartige Widerstandsmessungen lediglich eine geringe Aussagekraft hinsichtlich der mechanischen Belastbarkeit der Schweißnaht aus.

Zur Bewertung der mechanischen Stabilität der Schweißverbindungen sind beispielsweise Abzugtests möglich. Bei einem solchen Abzugtest wird beispielsweise die (Zug-)Festigkeit und das Verformungsverhalten der Schweißnaht bis zu einem Bruch ermittelt. Dadurch wird jedoch die Schweißverbindung, und somit die Batteriezelle oder die Batterie, zerstört, wodurch die Batteriezellen oder Batterien als Ausschussteile nicht verwertbar sind.

Aus den vorstehend genannten Gründen werden Schweißnähte während der Herstellung von Batterieelementen typischerweise nicht inline charakterisiert. Daher wird ein Sicherheitsfaktor bei der Auslegung der Schweißnähte in der Regel hinreichend groß dimensioniert, dass auch bei lediglich sporadischer Kontrolle oder Charakterisierung die Qualität der Schweißnähte gewährleistet ist. Dadurch werden wirtschaftliche Nachteile sowie eine erhöhte Anzahl von Ausschussteilen nach der Produktion oder Herstellung der Batterieelemente herkömmlicherweise in Kauf genommen.

Der Erfindung liegt die Aufgabe zugrunde, ein besonders geeignetes Verfahren zur Herstellung eines Batterieelements anzugeben. Insbesondere soll das Verfahren zur Optimierung eines Batteriezellproduktionsprozess geeignet sein. Vorzugsweise soll eine einfache und inlinefähige Untersuchung und/oder Prüfung von Schweißverbindungen zwischen Bauteilen, vorzugsweise zwischen Batteriekomponenten, ermöglicht werden. Der Erfindung liegt weiterhin die Aufgabe zugrunde, eine besonders geeignete Vorrichtung sowie eine besonders geeignete Software anzugeben.

Hinsichtlich des Verfahrens wird die Aufgabe mit den Merkmalen des Anspruchs 1 und hinsichtlich der Vorrichtung mit den Merkmalen des Anspruchs 8 sowie hinsichtlich der Software mit den Merkmalen des Anspruchs 11 erfindungsgemäß gelöst. Vorteilhafte Ausgestaltungen und Weiterbildungen sind Gegenstand der Unteransprüche.

Die im Hinblick auf das Verfahren angeführten Vorteile und Ausgestaltungen sind sinngemäß auch auf die Vorrichtung und/oder die Software übertragbar und umgekehrt. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Das erfindungsgemäße Verfahren ist zur Herstellung eines Batterieelements, insbesondere einer Batteriezelle, vorgesehen sowie dafür geeignet und ausgestaltet. Verfahrensgemäß werden mindestens zwei Batteriekomponenten in einem Schweißvorgang stoffschlüssig mittels mindestens einer Schweißverbindung gefügt. Beispielsweise sind die Batteriekomponenten hierbei übereinander gestapelt angeordnet, dies bedeutet, dass mindestens zwei Batteriekomponenten abschnittsweise überlappend angeordnet sind, wobei die Schweißverbindung insbesondere in dem überlappenden Bereich bewirkt wird. Alternativ ist es beispielsweise ebenso denkbar, dass die Batteriekomponenten auf Parallelstoß oder nebeneinander (Stumpfstoß) angeordnet sind. Die gefügten oder verschweißten Batteriekomponenten sind insbesondere Folienelemente des Batterieelements, wie beispielsweise Kathodenableiter aus Aluminium oder Anodenableiter aus Kupfer. Bei dem Schweißprozess werden beispielsweise eine oder mehrere Batterieelektroden mit einem Stromableiter oder einer Ableiterfahne oder einer Busbar kontaktiert und verbunden.

Im Zuge des Schweißvorgangs wird mindestens eine Schweißnaht als Schweißverbindung zwischen den Batteriekomponenten erzeugt. Unter einer "Schweißnaht" sind hier und im Folgenden insbesondere die räumliche Ausdehnung und/oder der räumliche Verlauf der Schweißverbindung beziehungsweise des durch den Schweißprozess bewirkten Stoffschlusses zu verstehen.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Gemäß dem Verfahren wird ein erster Wirbelstromsensor mindestens einmal über die mindestens eine Schweißverbindung geführt, wobei von dem ersten Wirbelstromsensor ein Datensatz der erfassten Messsignale als Wirbelstromdaten erzeugt wird. Anschließend wird mit einer trainierten künstlichen Intelligenz anhand der Wirbelstromdaten eine die Schweißverbindung charakterisierende erste Ausgangsgröße erzeugt. Anhand der ersten Ausgangsgröße wird eine Qualitätskontrolle durchgeführt, wobei der Schweißvorgang anhand eines Ergebnisses der Qualitätskontrolle gesteuert und/oder geregelt wird. Mit anderen Worten erfolgt eine Kontrolle der Schweißverbindung, wobei abhängig von dem Kontrollergebnis der Schweißvorgang für nachfolgende Batterieelemente gesteuert und/oder geregelt wird. Dadurch ist ein besonders geeignetes Verfahren zur Herstellung eines Batterieelements realisiert. Insbesondere wird somit stets ein möglichst optimierter und angepasster Schweißvorgang für die Batteriekomponenten gewährleistet.

In einer bevorzugten Ausführungsform wird die Charakterisierung der mindestens einen Schweißnaht, also die Wirbelstromuntersuchung, inline durchgeführt. Dies bedeutet, dass die Wirbelstrommessung Hinsichtlich der Herstellung des Batterieelements prozessintegriert ausgeführt ist. Die Wirbelstrommessung wird also im Zuge der Herstellungs- oder Produktionslinie, beispielsweise "on-the-fly" durchgeführt, wodurch eine besonders gleichförmige Produktion und Herstellung des Batterieelements ermöglicht ist.

Durch die Inline-Wirbelstrommessung zur Charakterisierung oder Kontrolle der Schweißnähte werden Ausschussteile reduziert, wodurch in der Folge Produktions- und Herstellungskosten des Batterieelements vorteilhaft reduziert werden. Insbesondere ist somit eine Vollautomatisierung der Untersuchung und/oder Prüfung ermöglicht, welche vorzugsweise im Produktionstakt erfolgt.

Des Weiteren ermöglicht die Inline-Wirbelstrommessung eine automatische Rückkopplung in die Prozess-Parametrierung und eine verbesserte Prozessregelung durch die Schweißnaht-Charakterisierung. Dadurch ist beispielsweise ein Soll-Ist-Vergleich zur Überprüfung der Maßhaltigkeit oder Formänderung der erzeugten Schweißnähte ermöglicht, beispielsweise durch einen Vergleich mit einem Referenzdatensatz. Weiterhin wird somit das Prozessverständnis bei der Erzeugung der Schweißverbindungen verbessert, was einer Verbesserung der Schweißnahtqualität und somit der Qualität der Batterieelemente zuträglich ist.

Verfahrensgemäß wird die oder jede Schweißverbindung beziehungsweise Schweißnaht somit zerstörungsfrei mittels einer Wirbelstrommessung charakterisiert. Bei einer solchen Wirbelstrommessung wird der Effekt ausgenutzt, dass Verunreinigungen und Beschädigungen, also Defekte oder Fehler, in der elektrisch leitfähigen Schweißnaht deren elektrische Leitfähigkeit oder Permeabilität beeinflussen. Durch die elektromagnetischen Wechselfelder des Wirbelstromsensors, welcher wie oben beschrieben über die Schweißnaht geführt wird, werden in der Schweißnaht Wirbelströme aufgrund der induzierten Spannung erzeugt werden. Der Sensor dient hierbei beispielsweise gleichzeitig als Sender sowie als Empfänger, sodass der Einfluss der oben genannten Defekte in der Schweißnaht auf die induzierten Wirbelströme erfasst wird, wodurch eine einfache und aufwandsreduzierte sowie zerstörungsfreie Untersuchung und/oder Prüfung der oder jeder Schweißnaht ermöglicht ist.

Für die Wirbelstrommessung ist erfindungsgemäß mindestens ein Wirbelstromsensor vorgesehen, welcher entlang der mindestens einen Schweißnaht bewegbar ist, und während einer solchen Bewegung einen Datensatz der erfassten Messsignale erzeugt. Der Wirbelstromsensor erzeugt beispielsweise ein elektromagnetisches Wechselfeld, wobei durch die Bewegung des Wirbelstromsensors entlang der Schweißnaht in dem Material der Schweißnaht elektrische Spannungen und in der Folge Wirbelströme induziert werden. Die Wirbelströme werden mittels des Wirbelstromsensors als Messsignale oder Schwarzwerte erfasst und hieraus ein Datensatz als Wirbelstromdaten erzeugt. Zur Erfassung der Messsignale weist der Wirbelstromsensor beispielsweise eine Detektionsspule auf, welche den Einfluss der Struktur der Schweißnaht auf die induzierten Ströme erfasst.

Der Datensatz umfasst hierbei beispielsweise Realteil-Daten, welche in Phase mit der Wechselstromanregung sind, und Imaginärteil-Daten, welche um 90° phasenversetzt oder senkrecht zu der Wechselstromanregung erfasst werden. Eine Tiefen- oder Z-Information, also eine Tiefenauflösung, der Schweißverbindung ist hierbei in einem Verhältnis der Realteil- und Imaginärteil-Daten enthalten. Aufgrund der Realteil- und Imaginärteil-Daten weisen die Wirbelstromdaten eine vergleichsweise geringe Interprätierbarkeit im Vergleich zu anderen Referenzmethoden, insbesondere im Vergleich zu bildgebenden Verfahren oder Topographieverfahren, auf. Zur sicheren und zuverlässigen Qualitätskontrolle werden die Wirbelstromdaten daher mittels der trainierten künstlichen Intelligenz (KI) ausgewertet, und die (erste) Ausgangsgröße erzeugt. Die Ausgangsgröße gewährleistet eine möglichst einfache und aufwandreduzierte (automatische oder manuelle/augenscheinliche) Interprätierbarkeit der Schweißverbindungsqualität im Zuge der Qualitätskontrolle (Qualitätsanalyse). Dadurch ist eine zuverlässige Schweißnahtkontrolle bei der Batteriezellproduktion gewährleistet.

Künstliche Intelligenz beziehungsweise maschinelles Lernen basieren auf Rechenmodellen und Algorithmen zur Klassifizierung, Bündelung, Regression und Dimensionalitätsreduktion. Unter Maschinenlernverfahren oder maschinellen Lernen ist insbesondere eine Generierung von Wissen aus Erfahrung zu verstehen, bei welcher ein künstliches System aus Beispielen lernt und diese nach Beendigung einer solchen Lernphase verallgemeinern kann. Dies bedeutet, dass die Beispiele nicht auswendig gelernt werden, sondern dass das System Muster und Gesetzmäßigkeiten in den Lern- oder Trainingsdaten bestimmt. Ein zum Training der künstlichen Intelligenz genutztes Maschinenlernverfahren ist hierbei beispielsweise als ein Lern- oder Prognosealgorithmus ausgeführt, welcher mittels eines Controllers ausgeführt wird.

Als künstliche Intelligenz wird insbesondere ein neuronales Netz verwendet, in dem die Auswertung oder Umsetzung der Wirbelstromdaten in die Ausgangsgröße integriert ist. Die Auswertung oder Umsetzung ist dann nicht in einem Speicher hinterlegt, sondern in der Topologie des neuronalen Netzes integriert. Vorzugsweise wird hierbei ein Convolutional Neural Network (CNN oder CovNet) verwendet.

In einer bevorzugten Ausgestaltung des Verfahrens wird von der KI als erste Ausgangsgröße ein prognostizierter Datensatz einer Referenzmethode und/oder Qualitätsparameter der Schweißverbindung erzeugt. Mit anderen Worten werden die Messergebnisse einer Messmethode (Wirbelstrommessung) durch die trainierte KI an Messdaten einer anderen Messmethode (Referenzmethode) angenähert. Aus den Wirbelstromdaten werden also insbesondere korrespondierende oder entsprechende Bilddaten einer bildgebenden Referenzmethode geschätzt. Zusätzlich oder alternativ ist es ebenso möglich, dass die KI derart trainiert ist, dass sie aus den Wirbelstromdaten direkt die für die Qualitätskontrolle notwendigen Qualitätsparameter prognostiziert oder vorhersagt. Dadurch ist eine besonders zuverlässige Qualitätskontrolle und somit Prozesssteuerung/-regelung ermöglicht.

Unter einem Qualitätsparameter ist hier und im Folgenden insbesondere ein die Qualität oder Beschaffenheit der Schweißverbindung charakterisierender Parameter oder Größe zu verstehen. Die KI kann hierbei beispielsweise mechanische Qualitätsparameter, wie beispielsweise eine Abziehkraft, und/oder elektrische Qualitätsparameter, wie beispielsweise ein Übergangswiderstand zwischen den verschweißten Batteriekomponenten, und/oder ein topologischer Qualitätsparameter, wie beispielsweise die Oberflächenbeschaffenheit oder Oberflächenkontur der Schweißverbindung, aus den Wirbelstromdaten abschätzen.

In einer vorteilhaften Weiterbildung wird als antrainierte Referenzmethode ein Tomographieverfahren, insbesondere ein Computer-Tomographieverfahren (CT), verwendet. Die Messergebnisse der Wirbelstrommessung sind sehr aussagekräftig, weisen jedoch eine geringe Interprä-tierbarkeit auf. Die künstliche Intelligenz wird vorzugsweise zur Approximation von Messungen von Referenzmethoden auf Basis des Wirbelstromsignals verwendet. Die Computertomographie liefert detailreiche, gut zu interpretierende Bilder, ist allerdings aufgrund der Messdauer und ihrer Beschaffungs- und Wartungskosten unattraktiv für die Verwendung in der Produktion. Durch die Verwendung einer entsprechend trainierten künstliche Intelligenz, wird auf Basis der Wirbelstromdaten eine Prognose für CT-Daten erstellt. Damit ist es möglich, gut interpretierbare Messverfahren zu simulieren und in der Produktion zu verwenden. Das erfindungsgemäße Verfahren ist hierbei jedoch nicht ausschließlich auf die Paarung Wirbelstrom - CT begrenzt, sondern kann auch für andere Messmethoden, beispielsweise Röntgen oder Ultraschall, verwendet werden.

Zum Training der KI, insbesondere des CNN, werden beispielsweise eine Vielzahl von Proben charakterisiert und analysiert. Als Proben werden miteinander verschweißte Batteriekomponenten verwendet. Beispielsweise werden 100 verschweißte (Kathoden-/Anoden-) Ableiter sowohl mittels der Wirbelstrommessung und der zu reproduzierenden oder anzutrainierenden Referenzmethode, beispielsweise mittels CT, vermessen. Diese Messdaten werden als Trainingsdaten genutzt, wobei das Training nach Art einer Back Propagation erfolgt, bei welchem in einem Gradientenabstiegsverfahren die Gewichte im CNN korrigiert werden, bis eine möglichst exakte Vorhersage oder Reproduzierung der CT-Daten anhand der Wirbelstromdaten realisiert ist.

Entsprechend kann eine KI auch auf die direkte Bestimmung der Qualitätsparameter aus den Wirbelstromdaten trainiert werden. Liegt eine hinreichend große Datenbasis vor, welche die Wirbelstrommessungen und die entsprechenden Qualitätsparameter (z.B. elektrischer Widerstand und Zugfestigkeit) beinhaltet, lässt sich ein Convolutional Neural Network antrainieren, welches automatisiert die relevanten Features aus dem Wirbelstromsignal extrahiert. Dies bedeutet beispielsweise, dass die Wirbelstromdaten mittels eines Klassifikators einer Klassifikation hinsichtlich der unterschiedlichen Qualitätsparameter unterzogen wird. Bei der Klassifikation werden die Qualitätsparameter aus den Wirbelstromdaten bestimmt, indem untersucht wird, ob die Wirbelstromdaten vorbekannte Merkmale aufweisen, welche zu einem vorbekannten Qualitätsparameter gehört.

In einer möglichen Ausbildung des Verfahrens werden die Wirbelstromdaten bei einer hohen Wirbelstromleistung, also einer hohen Anregungsamplitude, und bei einer niedrigen Wirbelstromleistung, also bei einer niedrigen Anregungsamplitude, des ersten Wirbelstromsensors gemessen. Durch die Wirbelstromdaten bei hohen und niedrigen Anregungen ist es möglich mittels der trainierten KI auch kleinere Defekte oder Effekte in den Messdaten aufzulösen und für die Bestimmung der Ausgangsgröße zu berücksichtigen.

Ein zusätzlicher oder weiterer Aspekt der Erfindung sieht vor, dass ein zweiter Wirbelstromsensor vorgesehen ist, welcher dem ersten Wirbelstromsensor vorgeschaltet ist. Mit anderen Worten wird die Schweißverbindung zunächst mit dem zweiten Wirbelstromsensor und anschließend mit dem ersten Wirbelstromsensor gemessen. Der zweite Wirbelstromsensor ist hierbei in einer Reflektionsgeometrie als ein induktiver Näherungssensor ausgebildet. Der zweite Wirbelstromsensor ist hierbei dazu vorgesehen und eingerichtet eine Topologie der Schweißverbindung zu charakterisieren. Mit dem zweiten Wirbelstromsensor wird also zunächst die Oberflächenrauheit oder Oberflächenbeschaffenheit der Schweißverbindung geprüft. Werden hierbei beispielsweise spitz emporstehende Abschnitte der Schweißverbindung erfasst, welche zu einer Beschädigung des ersten Wirbelstromsensors führen könnten, können die gefügten Batteriekomponenten als Ausschussteil aussortiert werden, bevor die Messung mit dem ersten Wirbelstromsensor erfolgt. Vorzugsweise werden die Wirbelstromdaten des zweiten Wirbelstromsensors nicht mit der KI ausgewertet oder verarbeitet. Dadurch wird der Inline-Einsatz des Verfahrens weiter verbessert.

In einer denkbaren Weiterbildung des Verfahrens werden die Wirbelstromdaten des ersten Wirbelstromsensors zusätzlich zu der trainierten KI auch analytisch ausgewertet, und eine die Schweißverbindung charakterisierende zweite Ausgangsgröße erzeugt, wobei die analytisch bestimmte (zweite) Ausgangsgröße mit der (ersten) Ausgangsgröße der KI verglichen wird. Insbesondere wird in einer geeigneten Ausführung anhand der zweiten Ausgangsgröße ein Schwellwertbereich bestimmt, wobei die Qualitätskontrolle lediglich durchgeführt wird, wenn die erste Ausgangsgröße innerhalb dieses Schwellwertbereichs ist.

Dies trägt dem Umstand Rechnung, dass es im Rahmen einer Großserienproduktion schwierig ist, sich lediglich auf die Verwendung einer KI zu verlassen, da die Plausibilität der Ergebnisse der KI nicht für jedes beliebige Szenario das vorkommen kann, vorab geprüft werden kann. Daher ist vorzugsweise eine zweistufige Auswertung der Wirbelstromdaten vorgesehen. Zunächst werden die Ergebnisse mit einem klassischen, analytischen Ansatz ausgewertet. Dieser liefert in der Regel nicht so präzise Ergebnisse wie die trainierte KI, jedoch sind die Ergebnisse, also die zweite Ausgangsgröße, einfacher nachzuvollziehen. In einem zweiten Schritt, wird die erste Ausgangsgröße anhand der präzisen KI-Prognose erstellt. Die Ergebnisse der beiden Auswertungen werden miteinander abgeglichen und es wird überprüft, ob die Ergebnisse der KI im Toleranzbereich der ungenaueren Ergebnisse des analytischen Ansatzes liegen. Somit können unvorhersagbare Ausbrüche oder Abweichungen der ersten Ausgangsgröße zuverlässig erkannt werden. Dadurch ist die Anwendung der KI in der Produktion durch eine analytische Komponente abgesichert.

Beispielsweise prognostiziert das Verfahren in der Batteriezellproduktion auf Basis der Wirbelstromdaten und der KI die Anzahl der Defekte in der Schweißnaht. Zusätzlich wird im Hintergrund grob die Anzahl der kreisförmigen Strukturen in den Wirbelstromdaten analytisch bestimmt. Dadurch kann zwar keine genaue Anzahl der Defekte ermittelt werden, jedoch kann das Ergebnis der KI hiermit gegengeprüft werden, und somit grobe Fehlverhalten der KI frühzeitig erkannt werden.

Zur analytischen Auswertung ist beispielsweise eine Amplitudenanalyse der Wirbelstromdaten, also eine Analyse oder Bestimmung der Minima und Maxima, denkbar. Alternativ kann eine analytische Auswertung verwendet werden, wie es in der zum Anmeldezeitpunkt noch unveröffentlichten deutschen Anmeldung der Anmelderin vom 16.12.2019 mit dem Aktenzeichen 10 2019 219 743.4 beschrieben ist. Deren Offenbarungsgehalt, insbesondere deren Ansprüche (mit zugehörigen Erläuterungen) werden hiermit ausdrücklich mit in die vorliegende Anmeldung mit einbezogen. Speziell wird Bezug genommen auf die Fig. 5 mit den zugehörigen Ausführungen speziell auf Seiten 12 bis 14. Hierbei werden an die Wirbelstromdaten Kurven angefittet, wobei sich aus den resultierenden Fit-Parametern beispielsweise die Position und Dimension eines Defektes in der Schweißverbindung analytisch bestimmbar ist.

Die erfindungsgemäße Vorrichtung ist zur Herstellung eines Batterieelements, insbesondere zur Herstellung einer Batterie oder einer Batteriezelle, geeignet und eingerichtet. Die Vorrichtung weist hierbei eine Schweißeinrichtung zur stoffschlüssigen Schweißverbindung von mindestens zwei Batteriekomponenten auf. Die Schweißeinrichtung ist beispielsweise für ein Ultraschallschweißen oder ein Laserstrahlschweißen geeignet und eingerichtet. Die zu fügenden oder zu verschweißenden Batteriekomponenten sind beispielsweise eine Batterieelektrode und ein Stromableiter beziehungsweise ein Ableitertab oder ein Busbar. Die Vorrichtung weist weiterhin einen (ersten) Wirbelstromsensor zur Erzeugung und Erfassung von Wirbelströmen im Bereich mindestens einer durch die Schweißeinrichtung erzeugten Schweißnaht auf. Die Schweißein-richtung und der Wirbelstromsensor sind mit einem Controller, das heißt mit einer Steuereinheit, gekoppelt. Dadurch ist eine besonders geeignete Vorrichtung zur Herstellung von Batterieelementen realisiert.

Der Controller ist hierbei allgemein - programm- und/oder schaltungstechnisch - zur Durchführung des vorstehend beschriebenen erfindungsgemäßen Verfahrens beziehungsweise Verwendung eingerichtet. Der Controller ist somit konkret dazu eingerichtet, nach einem Schweißprozess der Schweißeinrichtung mittels des Wirbelstromsensors Wirbelströme in der Schweißnaht beziehungsweise im Bereich der Schweißnaht zu induzieren, und diese Wirbelströme beziehungsweise die Verteilung und Intensität der Wirbelströme in der Schweißnaht oder dem Bereich zu erfassen und auszuwerten. Insbesondere ist eine trainierte KI in dem Controller hinterlegt oder integriert. Der Controller ist weiterhin insbesondere dazu geeignet und eingerichtet, den Herstellungs- oder Produktionsprozess des Batterieelements, insbesondere den Schweißprozess, anhand der charakterisierten Schweißnaht zu steuern und/oder zu regeln.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Der erste Wirbelstromsensor kann beispielsweise in Reflektionsgeometrie ausgeführt sein. In einer bevorzugten Ausgestaltung ist der erste Wirbelstromsensor jedoch als ein Gabelsensor in Transmissionsgeometrie, also als ein Transmissions-Gabelsensor, ausgeführt. Dadurch ist ein besonders zweckmäßiger Wirbelstromsensor realisiert.

Der Gabelsensor weist hierbei beispielsweise ein etwa hufeisenförmiges oder U-förmiges (Sensor-)Gehäuse auf, wobei im Bereich der Freienden der vertikalen U-Schenkel eine Sendespule und eine gegenüberliegend angeordnete Empfängerspule angeordnet sind. Die Spulen beziehungsweise das Spulenpaar sind/ist hierbei geeigneterweise in einem transformatorischen Prinzip mit dem Controller verbunden. Die Erregerfrequenz der Spulen, also die Frequenz des bei Bestromung der Spulen erzeugten magnetischen Feldes, ist hierbei derart gewählt, dass eine ausreichende Durchdringung des elektrisch leitenden Materials der Schweißverbindung gewährleistet ist.

Zur Untersuchung der Schweißverbindung wird das Batterieelement im Bereich der Gabelöffnung (Maulöffnung) zwischen die Schenkel eingeführt. Durch die Gabelform ist der Wirbelstromsensor hierbei einfach entlang der Schweißverbindung bewegbar und/oder verschwenkbar.

Vorteilhafterweise ist der Wirbelstromsensor hierbei prüfgerecht ausgeführt, also hinsichtlich seiner Dimensionierung und Ausgestaltung derart an die Batterieelemente angepasst, dass eine zuverlässige und einfache Charakterisierung der Fügeverbindung inline ermöglicht ist. Mit anderen Worten ist die Sensorgeometrie hinsichtlich dem Produktdesign, also abhängig von der Stoßart (Parallelstoß, Stumpfstoß), der Bauteilgeometrie, den elektrischen Kennzahlen und der Form der Fügeverbindung ausgestaltet.

Der erste Wirbelstromsensor wird im Zuge des Verfahrens linienförmig über die Schweißnaht geführt. Beispielsweise erzeugt eine solche Überfahrt einen Datensatz mit Bilddaten in Form von (zweidimensionalen) Schnittbildern oder Schnittaufnahmen der jeweiligen Schnittebene (XZ). Die Abszissenachse (X-Achse, X-Richtung) ist hierbei beispielsweise entlang der Messrichtung (Fahr- Bewegungsrichtung) des ersten Wirbelstromsensors beziehungsweise der Schweißnahtlängsrichtung und die Ordinatenachse (Y-Achse, Y-Richtung) entlang einer hierzu quer orientierten Querrichtung sowie die Applikatenachse (Z-Achse, Z-Richtung) entlang der Höhe der Schweißnaht orientiert.

Dies bedeutet, dass für eine dreidimensionale Auflösung oder Charakterisierung der Schweißverbindung ein (erster) Wirbelstromsensor, welcher mit einem einzigen Spulenpaar ausgestattet ist, mehrfach über die Schweißnaht gefahren wird, wobei zur Erfassung von Wirbelstromdaten in Y-Richtung beispielsweise mehrere aufeinanderfolgende, in Y-Richtung, versetzt angeordnete, Messungen entlang der X-Richtung durchgeführt werden. Mit anderen Worten wird eine Mehrfachüberfahrt der Schweißnaht mit dem ersten Wirbelstromsensor durchgeführt.

Zur Optimierung der Messdauer ist es in einer vorteilhaften Ausführung vorgesehen, ein Array aus mehreren Spulenpaaren zu erstellen, welche beispielsweise in Y-Richtung benachbart zueinander am Wirbelstromsensor angeordnet sind, so dass der Wirbelstromsensor in einer einzelnen Fahrt über die Schweißverbindung die notwendigen Wirbelstromdaten erfasst. Dadurch wird die benötigte Messzeit erheblich reduziert, wodurch die Anwendbarkeit des Systems oder Verfahrens in der Produktion verbessert wird. Insbesondere ist somit eine schnellere Untersuchung und/oder Prüfung ermöglicht, wodurch Taktzeiten bei der Charakterisierung und im Zuge der Qualitätskontrolle vorteilhaft reduziert werden.

Ein zusätzlicher oder weiterer Aspekt der Erfindung sieht eine Software auf einem Medium oder Datenträger zur Durchführung oder Ausführung des vorstehend beschriebenen Verfahrens vor. Dies bedeutet, dass die Software auf einem Datenträger hinterlegt ist, und zur Ausführung des vorstehend beschriebenen Verfahrens vorgesehen, sowie dafür geeignet und ausgestaltet ist, wenn die Software auf einem Computer abläuft. Die Software weist hierbei insbesondere eine verfahrensgemäß trainierte KI, beispielsweise ein CNN, auf. Dadurch ist eine besonders geeignete Software für die Herstellung eine Batterieelements realisiert, mit welcher die Funktionalität zur Durchführung des erfindungsgemäßen Verfahrens programmtechnisch implementiert wird. Die Software ist somit insbesondere eine Betriebssoftware (Firmware), wobei der Datenträger beispielsweise ein Datenspeicher eines Controllers ist.

Nachfolgend sind Ausführungsbeispiele der Erfindung anhand einer Zeichnung näher erläutert. Darin zeigen in vereinfachten und schematischen Darstellungen:
Fig. 1 in Draufsicht eine Vorrichtung zur Herstellung eines Batterieelements,
Fig. 2 in Perspektive einen als Gabelsensor ausgeführten Wirbelstromsensor zur Untersuchung der Schweißnaht, und
Fig. 3 Wirbelstromdaten des Wirbelstromsensors und mittels einer trainierten KI erzeugte CT-Daten sowie gemessene CT-Daten.

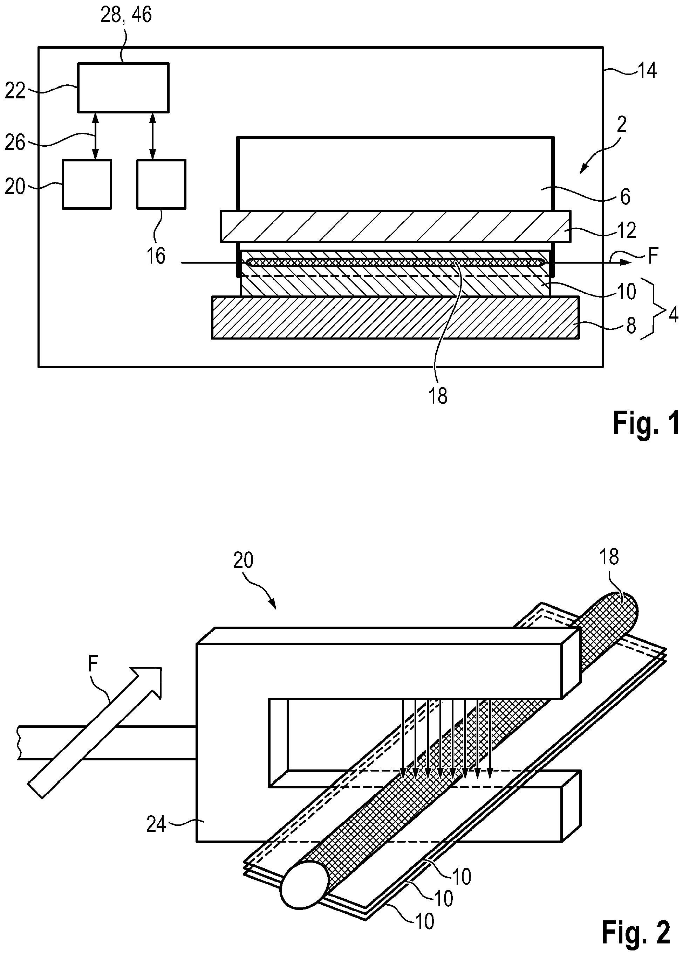

In der Fig. 1 ist schematisch und vereinfacht ein Batterieelement 2 einer nicht näher dargestellten Fahrzeugbatterie gezeigt. Das Batterieelement 2 weist zwei Batteriekomponenten 4, 6 als Bauteile auf.

Das Batterieelement 2 ist beispielsweise eine Batteriezelle, wobei die Batteriekomponente 4 hierbei insbesondere als eine Batterieelektrode mit einer Beschichtung 8 und mit einer Kollektor- oder Ableiterfolie 10, wobei die Batteriekomponente 6 insbesondere als ein Ableitertab ausgeführt ist. Zur verbesserten Anbindung im Bereich der Batteriekomponente beziehungsweise des Ableitertabs 6 und einem nicht näher gezeigten Gehäuseteil des Batterieelements 2 ist ein sogenanntes Vorsiegelband 12 im Bereich der Batteriekomponente 6 angeordnet. Mittels des Vorsiegelbands 12 ist ein Mindestabstand zur elektrischen Isolation zwischen den spannungsführenden Ableitertab 6 und dem Gehäuseteil realisiert.

In der Fig. 1 ist weiterhin in schematischer und stark vereinfachter Darstellung eine Vorrichtung 14 zur Herstellung des Batterieelements 2 gezeigt.

Die Vorrichtung 14 weist hierbei eine Schweißeinrichtung 16 zum stoffschlüssigen Schweißen der zumindest abschnittsweise übereinander gestapelt angeordneten Batteriekomponenten 4 und 6 auf. Die Schweißeinrichtung 16 ist beispielsweise für ein Ultraschallschweißen oder ein Laserstrahlschweißen geeignet und eingerichtet. Die Schweißeinrichtung 16 wird hierbei beispielsweise entlang einer Fügerichtung F bewegt, und dabei die Batteriekomponenten 4, 6 mittels mindestens einer Schweißverbindung oder Schweißnaht 18 stoffschlüssig gefügt.

Die Vorrichtung 14 weist weiterhin einen Wirbelstromsensor 20 zur Charakterisierung oder Kontrolle der mindestens einen Schweißnaht 18 auf. Der Wirbelstromsensor 20 ist hierbei zur Erzeugung und Erfassung von Wirbelströmen im Bereich der mindestens einen Schweißnaht 18 geeignet und eingerichtet.

Die Schweißeinrichtung 16 und der Wirbelstromsensor 20 sind mit einem Controller 22, das heißt mit einer Steuereinheit, gekoppelt.

In dem Ausführungsbeispiel der Fig. 1 weist das Batterieelement 2 eine einzige, längliche Schweißnaht 18 auf. Mit anderen Worten sind die Batteriekomponenten 4 und 6, insbesondere das Ableitertab 6 und die Kollektorfolie 10, mittels einer Schweißnaht 18 miteinander verschweißt. Ebenso denkbar sind jedoch beispielsweise entlang der Fügerichtung F verteilt angeordneten, längliche Schweißnähte oder eine Anzahl von etwa punktförmigen Schweißnähten (Schweißpunkte), welche beispielsweise in zwei Reihen senkrecht zur Fügerichtung F verteilt angeordnet sind.

Der in Fig. 2 näher gezeigte Wirbelstromsensor 20 ist beispielsweise in Form eines Transmissions-Gabelsensors ausgeführt.

Der Gabelsensor 20 weist hierbei beispielsweise ein etwa hufeisenförmiges oder U-förmiges (Sensor-)Gehäuse 24 auf, wobei im Bereich der vertikalen U-Schenkel eine Sendespule und eine gegenüberliegend angeordnete Empfängerspule angeordnet sind. Die nicht näher gezeigten Spulen sind hierbei in einem transformatorischen Prinzip mit dem Controller verbunden. Die Erregerfrequenz der Spulen ist hierbei derart gewählt, dass eine ausreichende Durchdringung des elektrisch leitenden Materials der Schweißverbindung 18 gewährleistet ist. Vorzugsweise ist ein Spulenarray vorgesehen, also mehrere benachbart angeordnete Spulenpaare, welche jeweils ein Erregerfeld erzeugen und empfangen können

Der Controller 22 steuert und/oder regelt den Herstellungsprozess der Batterieelemente 2, insbesondere den Schweißprozess also die Schweißeinrichtung 16, anhand einer Qualitätskontrolle oder Charakterisierung der erzeugten Schweißnähte 18. Hierbei ist es möglich, dass das Batterieelement 2 als Ausschussteil charakterisiert wird, wenn anhand der Qualitätskontrolle beispielsweise ein intensiver Defekt in der Schweißnaht 18 erkannt wird.

Nachfolgend ist ein Verfahren zur Herstellung des Batterieelements 2 näher erläutert, welches beispielsweise mittels einer Software des Controllers 22 ausgeführt wird.

Verfahrensgemäß werden die Batteriekomponenten 4, 6 in einem Schweißvorgang oder Schweißprozess mittels der Schweißeinrichtung 16 stoffschlüssig geschweißt. Anschließend wird der Wirbelstromsensor 20 über die Schweißverbindung oder Schweißnaht 18 geführt, wobei von dem Wirbelstromsensor 20 ein Datensatz der erfassten Messsignale als Wirbelstromdaten 26 erzeugt wird. Die Wirbelstromdaten 26 werden an den Controller 22 gesendet.

In dem Controller 22 ist eine trainierte künstliche Intelligenz, insbesondere in Form eines Convolutional Neural Network, integriert. Die künstliche Intelligenz beziehungsweise das CNN ist hierbei derart trainiert, dass es aus den Wirbelstromdaten 26 eine die Schweißverbindung 18 charakterisierende Ausgangsgröße 28 bestimmt. Anhand der Ausgangsgröße 28 wird beispielsweise vom Controller 22 automatisch eine Qualitätskontrolle der Schweißverbindung 18 durchgeführt, wobei der Schweißvorgang, also die Schweißeinrichtung 16, anhand eines Ergebnisses der Qualitätskontrolle gesteuert und/oder geregelt wird.

Die KI kann hierbei derart trainiert sein, dass als Ausgangsgröße 28 direkt Qualitätsparameter wie beispielsweise eine Abziehkraft oder ein elektrischer Übergangswiderstand ausgegeben wird. Dadurch ist es möglich mit der Ausgangsgröße 28 selbst direkt die Qualitätskontrolle auszuführen. Zusätzlich oder alternativ kann die KI derart trainiert sein, dass als Ausgangsgröße 28 ein prognostizierter oder geschätzter Datensatz erzeugt wird, welcher einer Messung einer Referenzmethode entspricht. Mit anderen Worten werden die Messergebnisse einer Messmethode (Wirbelstrommessung) durch die trainierte KI an Messdaten einer anderen Messmethode (Referenzmethode) angenähert. Dadurch wird die Interprätierbarkeit, insbesondere bei einer manuellen oder augenscheinlichen Qualitätskontrolle durch einen Benutzer der Vorrichtung 14, verbessert.

In einer nicht näher dargestellten Ausführungsform ist beispielsweise ein zweiter Wirbelstromsensor vorgesehen, welcher dem Wirbelstromsensor 20 vorgeschaltet ist. Mit anderen Worten wird die Schweißverbindung 18 zunächst mit dem zweiten Wirbelstromsensor und anschließend mit dem Wirbelstromsensor 20 gemessen. Der zweite Wirbelstromsensor ist hierbei in einer Reflektionsgeometrie als ein induktiver Näherungssensor ausgebildet, und dazu vorgesehen und eingerichtet eine Topologie der Schweißverbindung 18 zu charakterisieren. Die Daten des zweiten Wirbelstromsensors werden hierbei geeigneterweise ebenfalls an den Controller 22 übermittelt und beispielsweise bei der Qualitätskontrolle berücksichtigt.

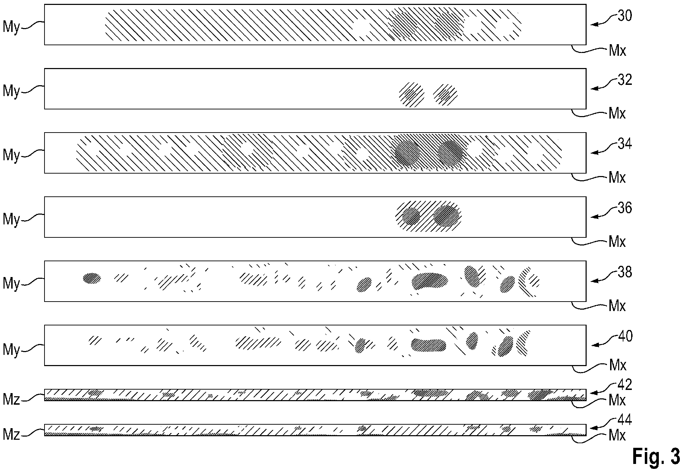

Nachfolgend ist anhand der Fig. 3 eine Prognose einer Referenzmethode näher erläutert. Das Diagramm der Fig. 3 umfasst acht horizontale, übereinander angeordnete Abschnitte 30, 32, 34, 36, 38, 40, 42, 44.

Die Abschnitte 30, 32, 34, und 36 zeigen hierbei Wirbelstromdaten 26 einer gemessenen Schweißverbindung 18. Die Abschnitte 38 und 42 zeigen Messdaten einer Referenzmethode, insbesondere einer Computertomographie-Messung, wobei die Abschnitte 40 und 44 die entsprechenden CT-Daten zeigen, welche als Ausgangsgröße 28 von der trainierten KI aus den Wirbelstromdaten 26 prognostiziert sind. Die Abschnitte 30 bis 44 zeigen hierbei jeweils zweidimensionale Schnittbilder durch die Schweißverbindung 18.

In den Abschnitten 30 bis 44 ist horizontal, also entlang der Abszissenachse (X-Achse), eine Messstrecke Mx entlang der Fügerichtung F, beispielsweise in Millimeter (mm), aufgetragen. In den Abschnitten 30 bis 40 ist hierbei entlang der vertikalen Ordinatenachse (Y-Achse) eine Messstrecke My entlang einer Querrichtung, beispielsweise in Millimeter (mm), gezeigt. Die Abschnitte 42 und 44 zeigen entlang der vertikalen Ordinatenachse (Y-Achse) eine Messstrecke Mz entlang einer Höhenrichtung der Schweißverbindung 18, beispielsweise in Millimeter (mm). Dies bedeutet, dass die Abschnitte 30 bis 40 jeweils eine Schnittdarstellung in einer transversalen XY-Ebene der Schweißverbindung 18 zeigen, wobei in den Abschnitten 42 und 44 eine Schnittdarstellung einer hierzu senkrecht orientierten XZ-Ebene gezeigt ist.

Die in den Abschnitten 30 bis 36 gezeigten Wirbelstromdaten 26 sind vorzugsweise mit einem Wirbelstromsensor 20 mit einem Spulenarray aufgenommen. Insbesondere ist jede Messzeile entlang der Messstrecke Mx mit einem Spulenpaar aufgenommen. Beispielsweise weist der Wirbelstromsensor 20 hierbei zwölf benachbarte Spulenpaare auf.

Der Abschnitt 30 zeigt Realteil-Daten, welche bei einer niedrigen Anregungsleistung des Wirbelstromsensors 20 erfasst wurden, wobei der Abschnitt 32 die entsprechenden Imaginärteil-Daten zeigt. In dem Abschnitt 34 sind Realteil-Daten, welche bei einer hohen Anregungsleis-tung des Wirbelstromsensors 20 erfasst wurden, gezeigt, wobei der Abschnitt 36 die entsprechenden Imaginärteil-Daten zeigt.

Die trainierte KI bestimmt aus den aufgenommenen Wirbelstromdaten 26 der Abschnitte 30 bis 36 entsprechende CT-Daten (Abschnitt 40, 44). Wie in der Figur 3 ersichtlich ist, weisen die mittels der trainierten KI aus den Wirbelstromdaten 26 erzeugten CT-Daten eine hohe Übereinstimmung mit den tatsächlich gemessenen CT-Daten (Abschnitte 38, 42) auf.

In einer denkbaren Weiterbildung des Verfahrens werden die Wirbelstromdaten 26 des Wirbelstromsensors 20 zusätzlich zu der trainierten KI auch analytisch ausgewertet, und eine die Schweißverbindung charakterisierende zweite Ausgangsgröße 46 erzeugt. Anhand der Ausgangsgröße 46 wird ein Schwellwertbereich bestimmt, wobei die Qualitätskontrolle lediglich durchgeführt wird, wenn die Ausgangsgröße 28 innerhalb dieses Schwellwertbereichs liegt. Mit anderen Worten werden Ergebnisse der trainierten KI und der analytischen Auswertung miteinander abgeglichen und es wird überprüft, ob die Ergebnisse der KI im Toleranzbereich der Ergebnisse des analytischen Ansatzes liegen.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Batterieelement
- 4,6: Batteriekomponente
- 8: Beschichtung
- 10: Kollektorfolie
- 12: Vorsiegelband
- 14: Vorrichtung
- 16: Schweißeinrichtung
- 18: Schweißverbindung
- 20: Wirbelstromsensor/Gabelsensor
- 22: Controller
- 24: Gehäuse
- 26: Wirbelstromdaten
- 28: Ausgangsgröße
- 30 ... 44: Abschnitt
- 46: Ausgangsgröße
- F: Fügerichtung
- Mx, My, Mz: Messstrecke

## Patentansprüche

1. Verfahren zur Herstellung eines Batterieelements (2),
- wobei mindestens zwei Batteriekomponenten (4, 6) in einem Schweißvorgang stoffschlüssig mittels mindestens einer Schweißverbindung (18) gefügt werden,
- wobei mindestens ein erster Wirbelstromsensor (20) zur Erzeugung und Erfassung von Wirbelströmen in der Schweißverbindung (18) vorgesehen ist, welcher mindestens einmal über die mindestens eine Schweißverbindung (18) geführt wird,
- wobei der erste Wirbelstromsensor (20) beim Führen über die Schweißverbindung (18) Wirbelstromdaten (26) erzeugt,
- wobei anhand der Wirbelstromdaten (26) und einer trainierten künstlichen Intelligenz eine die Schweißverbindung (18) charakterisierende erste Ausgangsgröße (28) erzeugt wird,
- wobei anhand der ersten Ausgangsgröße (28) eine Qualitätskontrolle durchgeführt wird, und
- wobei der Schweißvorgang anhand eines Ergebnisses der Qualitätskontrolle gesteuert und/oder geregelt wird.

2. Verfahren nach Anspruch 1,
**dadurch gekennzeichnet,**
**dass** ein prognostizierter Datensatz einer Referenzmethode und/oder Qualitätsparameter der Schweißverbindung als erste Ausgangsgröße (28) erzeugt werden.

3. Verfahren nach Anspruch 2,
**dadurch gekennzeichnet,**
**dass** die Referenzmethode ein Tomographieverfahren, insbesondere ein Computer-Tomographieverfahren, ist.

4. Verfahren nach einem der Ansprüche 1 bis 3,
**dadurch gekennzeichnet,**
**dass** die Wirbelstromdaten (26) bei einer hohen Wirbelstromleistung und bei einer niedrigen Wirbelstromleistung des ersten Wirbelstromsensors (20) gemessen werden.

5. Verfahren nach einem der Ansprüche 1 bis 4,
**dadurch gekennzeichnet,**
- **dass** ein zweiter Wirbelstromsensor als induktiver Näherungssensor vorgesehen ist, welcher dem ersten Wirbelstromsensor (20) vorgeschaltet ist, und
**dass** mit dem zweiten Wirbelstromsensor eine Topologie der Schweißverbindung (18) charakterisiert wird.

6. Verfahren nach einem der Ansprüche 1 bis 5,
**dadurch gekennzeichnet,**
- **dass** die Wirbelstromdaten (28) analytisch ausgewertet und eine die Schweißverbindung (10) charakterisierende zweite Ausgangsgröße (46) erzeugt wird, und
- **dass** die erste und zweite Ausgangsgröße (28, 46) miteinander verglichen werden.

7. Verfahren nach Anspruch 6,
**dadurch gekennzeichnet,**
- **dass** anhand der zweiten Ausgangsgröße (46) ein Schwellwertbereich bestimmt wird, und
- **dass** die Qualitätskontrolle durchgeführt wird, wenn die erste Ausgangsgröße (28) innerhalb des Schwellwertbereichs ist.

8. Vorrichtung (14) zur Herstellung eines Batterieelements (2), aufweisend
- eine Schweißeinrichtung (16) zur stoffschlüssigen Schweißverbindung von mindestens zwei Batteriekomponenten (4, 6), und
- einen ersten Wirbelstromsensor (20) zur Erzeugung und Erfassung von Wirbelströmen im Bereich mindestens einer durch die Schweißeinrichtung erzeugten Schweißverbindung (18), sowie
- einen Controller (22) zur Durchführung eines Verfahrens nach einem der Ansprüche 1 bis 7.

9. Vorrichtung nach Anspruch 8,
**dadurch gekennzeichnet,**
**dass** der Wirbelstromsensor (20) als ein Gabelsensor in Transmissionsgeometrie ausgeführt ist.

10. Vorrichtung nach Anspruch 8 oder 9,
**dadurch gekennzeichnet,**
**dass** der Wirbelstromsensor (20) ein Spulenarray mit einer Anzahl von Spulen aufweist, mittels welchen jeweils Wirbelströme erzeugbar und erfassbar sind.

11. Software auf einem Datenträger zur Durchführung eines Verfahrens nach einem der Ansprüche 1 bis 7, wenn die Software auf einem Computer abläuft.
